# EUROPEAN PATENT APPLICATION

(11) **EP 4 574 919 A1**
(43) Date of publication of application: **25.06.2025**
(21) Application number: 23307265.1
(22) Date of filing: 19.12.2023
(51) Int. Cl.: C09K 5/04

(54) **REACTIVE WORKING FLUIDS FOR CYCLIC THERMODYNAMIC CONVERSION MACHINES AND CYCLIC THERMODYNAMIC CONVERSION MACHINES COMPRISING SAID WORKING FLUID**

(71) Applicant: Centre National de la Recherche Scientifique, 75016 Paris (FR); Université de Lorraine, 54000 Nancy (FR)
(72) Inventor: LASALA, Silvia, 54760 FAULX (FR); HERBINET, Olivier, 54000 NANCY (FR); ARNOUX, Philippe, 54122 VATHIMENIL (FR)
(74) Representative: IPAZ

(57) **Abstract**

Reactive working fluid for cyclic thermodynamic conversion machines, said working fluid, forming a monomer/dimer couple, said working fluid comprising a compound capable of reversibly associating/dissociating, during each thermodynamic cycle, by formation/breakage of Van der Waals bonds.

## Description

### Field of the invention

The present invention relates to the field of working fluids.

In particular, the present invention deals with a working fluid intended to be used in thermodynamic cycles.

The present invention also relates to cyclic thermodynamic conversion machines.

Especially but not exclusively, the present invention deals with heat pumps, refrigeration machines and power plants/engines.

### Background to the invention

Thermodynamic machines are based on the cyclic conversion of one or more types of energy entering these machines into another type of useful energy. In thermodynamic machines, the different forms of energy exchanged with the environment are internally converted one in another by an energy vector, the working fluid.

The working fluids of the state of the art can be organic or inorganic. The most commonly used working fluids are water in steam power plants, air and combustion products in gas turbines, and organic refrigerants for heat pumps and refrigeration cycles. Ideally, a working fluid should be chemically stable, that is, no irreversible chemical reaction, in particular side reaction, should take place along the thermodynamic cycle of energy conversion.

However, if used outside their thermal stability range, the organic working fluids of the state of the art tend to form new compound(s) through irreversible side reactions over thermodynamic cycles, which results in a decreased efficiency of the thermodynamic machine.

Each type of thermodynamic machines will exhibit different operating modes. Nevertheless, the working fluid in a thermodynamic machine will usually change its thermodynamic properties according to a thermodynamic cycle comprising four thermodynamic transformations. It may also exist several variants of the operating mode for a same type of the thermodynamic machines. In power plants, the working fluid may follow either a Rankine cycle, or a Brayton cycle, or a Stirling cycle, in each of which it undergoes four successive thermodynamic transformations. In heat pumps and refrigeration machines, the working fluid follows an inversed thermodynamic cycle in which it undergoes four successive thermodynamic transformations.

In each case, the energy to be provided to the cyclic thermodynamic conversion machine for the operation is in the form of mechanical energy, and thermal energy. Usually, the mechanical energy is provided to the system by a pump or a compressor powered by electrical or mechanical energy. The thermal energy is provided to the cycle by an external heat source and through a heat exchanger. In heat pumps and refrigeration machines operating in refrigeration/heating mode and most of power plants, the electrical or mechanical energy will be used to compress the working fluid. In heat pumps, and refrigeration machines operating in refrigeration/heating mode and most of power plants, the input thermal energy will be used to heat up the working fluid. The useful effect is the quantity of thermal energy transferred to the environment to be heated, in the case of heat pumps, or the quantity of thermal energy removed from the environment to be cooled down, in the case of refrigeration systems, or the quantity of mechanical energy released during the expansion process.

It still remains a strong need to increase the performance of thermodynamic machines.

In heat pumps and refrigeration machines, the currently used refrigerants still have either an adverse impact on the environment, in particular through global warming potential and ozone depletion potential, or safety drawbacks, such as flammability.

### Summary of the invention

An object of the invention is to provide working fluids:
- overcoming the drawbacks of the working fluids of the state of the art,
- allowing to decrease the operating cost of the thermodynamic machines of the state of the art,
- having no negative effect on global warming,
- having no ozone depletion potential effect,
- allowing to decrease the size of the thermodynamic machines of the state of the art, and/or
- allowing to increase performance of the thermodynamic machines of the state of the art.

Another object of the invention is to provide cyclic thermodynamic conversion machines:
- overcoming the drawbacks of the thermodynamic machines of the state of the art,
- with lower operating costs,
- having smaller sizes, and/or
- having higher yield and performances compared to the thermodynamic machines of the state of the art.

To this end, there is provided a reactive working fluid for cyclic thermodynamic conversion machines, said working fluid. The working fluid may be described as forming a monomer/dimer couple. The working fluid comprises a compound capable of reversibly associating/dissociating, during each thermodynamic cycle, by formation/breakage of Van der Waals bonds.

Preferably, the compound is capable of reversibly associating/dissociating, during each thermodynamic cycle, by formation/breakage of hydrogen bonds.

A cyclic thermodynamic conversion machine is said thermodynamic machine.

This invention can be defined as working fluids or compounds, used or intended to be used in thermodynamic machines, having the particularity of being reactive, over the phases of one thermodynamic cycle, instead of being inert. It can be understood by reactive working fluids or compounds: fluids having the chemical property of reversibly associating/dissociating, preferably to form dimer/monomer respectively, during each thermodynamic cycle.

Preferably, the working fluid or the compound dissociates or associates, to form monomers or to form dimers respectively, during each phase of the thermodynamic cycle. Preferably, the working fluid or the compound dissociates and associates, to form monomers and to form dimers respectively, during each phase of the thermodynamic cycle.

Preferably, the working fluid or the compound reversibly associates/dissociates over phases, or thermodynamic phases, of each thermodynamic cycle. A thermodynamic phase may be described as a thermodynamic transformation that the working fluid undergoes during the thermodynamic cycle. A thermodynamic transformation may be described as a thermodynamic state change. The skilled person has the general knowledge to figure out the four transformations carried out during a given thermodynamic cycle.

The working fluid or the compound may undergo or may be able to or may be arranged to undergo:
- a dissociation, at least partly, into monomers during a compression phase of the thermodynamic cycle,
- an association, at least partly, into dimers during a cooling phase of the thermodynamic cycle,
- an association, at least partly, into dimers during an expansion phase of the thermodynamic cycle,
- a dissociation, at least partly, into monomers during a heating phase of the thermodynamic cycle.

According to the present description, it is understood by cooling phase and heating phase the cooling of the thermodynamic fluid and the heating of the thermodynamic fluid.

During the heating and/or the cooling phase, the thermodynamic fluid may stay in the same state of matter, in gaseous state for instance, or may change, partly or in its entirety, of state of matter, from gaseous to liquid and conversely.

When the fluids undergoes a change of state of matter, which may be partial or complete, during the heating and/or the cooling phase, the cooling phase may be referred to as condensation phase and the heating phase may be referred to as evaporation phase.

The cooling phase may comprise a condensation of the working fluid. The cooling phase may be a condensation phase. The heating phase may comprise an evaporation of the working fluid. The heating phase may be an evaporation phase.

The working fluid or the compound used in a power Brayton or Rankine cycle may undergo or may be able to or may be arranged to undergo:
- a dissociation, at least partly, preferably in its entirety, into monomers during a compression phase of the thermodynamic cycle,
- an association, at least partly, preferably partly only, into dimers during a cooling phase of the thermodynamic cycle,
- an association, at least partly, preferably in its entirety, into dimers during an expansion phase of the thermodynamic cycle,
- a dissociation, at least partly, preferably partly only, into monomers during a heating phase of the thermodynamic cycle.

The working fluid or the compound used in a heat pump may undergo or may be able to or may be arranged to undergo:
- a dissociation, at least partly, preferably in its entirety into monomers during a compression phase of the thermodynamic cycle,
- an association, at least partly, preferably in its entirety, into dimers during a cooling phase of the thermodynamic cycle,
- an association, at least partly, preferably partly only, into dimers during an expansion phase of the thermodynamic cycle,
- a dissociation, at least partly, preferably partly only, into monomers during a heating phase of the thermodynamic cycle.

The working fluid or the compound used in a refrigeration cycle may undergo or may be able to or may be arranged to undergo:
- a dissociation, at least partly, preferably in its entirety, into monomers during a compression phase of the thermodynamic cycle,
- an association, at least partly, preferably partly only, into dimers during a cooling phase of the thermodynamic cycle,
- an association, at least partly, preferably in its entirety, into dimers during an expansion phase of the thermodynamic cycle,
- a dissociation, at least partly, preferably in its entirety, into monomers during a heating phase of the thermodynamic cycle.

Preferably, the working fluid is unable to form a new covalent bond. Preferably, the working fluid is unable to incur or undergo breakage of its covalent bonds during the thermodynamic cycle.

Preferably, the working fluid does not form new covalent bonds during a thermodynamic cycle or over thermodynamic cycles. Preferably, the working fluid does not undergo or is not subject to breakage or modification or changes of its covalent bond during a thermodynamic cycle or over thermodynamic cycles.

Preferably, the compound is an organic molecule.

Preferably, the working fluid or the compound comprises a carboxylic acid (R-COOH) and/or an acid halide (R-COX) and/or an aldehyde (R-COH). Preferably, R is a substituent or a functional group and X is a halogen.

Preferably, the working fluid or the compound comprises at least one, or comprises a composition containing, a carboxylic acid (R-COOH) and/or an acid halide (R-COX) and/or an aldehyde (R-COH).

Preferably, the working fluid or the compound consists in one or at least one, or consists in a composition containing, a carboxylic acid (R-COOH) and/or an acid halide (R-COX) and/or an aldehyde (R-COH).

Preferably, R is a chemical group.

Preferably, R is selected from the group comprising (C₁₋₁₅)alkyls, (C₁₋₁₅)alkyl-ethers, (C₁₋₁₅)dialkyl-ethers, (C₁₋₁₅)acetals, (C₂₋₁₅)alkenes, hydrogen or aromatic rings.

Preferably, R is a C₁-C₁₅ alkyl group, a C₂-C₁₅ alkene group, a hydrogen atom or an aromatic ring. Preferably, C₁-C₁₅ refers to the number of Carbon atoms of which the chemical R group is made of.

Preferably, the term (C₁-C₁₅)alkyl denotes or refers to any linear or branched carbon chain having from 1 to 15 carbon atoms and includes all the alkyl groups having 1 to 15 carbon atoms for example such as the methyl, ethyl, n-propyl, isopropyl, n-butyl, isobutyl, tert-butyl, neopentyl, isopentyl, hexyl, heptyl, octyl, nonyl, decyl, undecyl, dodecyl, tridecyl, tetradecyl, pentadecyl, groups. Preferably, R is selected from the group comprising (C₁-C₈)alkyl, (C₁-C₈)alkyl denotes or refers to any linear or branched carbon chain having from 1 to 8 carbon atoms in particular the methyl, ethyl, n-propyl, isopropyl, n-butyl, isobutyl, tert-butyl, neopentyl, isopentyl, hexyl, heptyl, octyl groups, more preferably chains with 1 to 5 carbon atoms or (C₁-C₅)alkyl for example such as the methyl, ethyl, n-propyl, isopropyl, n-butyl, isobutyl, tert-butyl, neopentyl, isopentyl groups and more preferably chains with 1 to 3 carbon atoms or (C₁-C₃)alkyl, in particular the methyl, ethyl, n-propyl and isopropyl groups.

Preferably, the term (C₁₋₁₅)alkyl-ethers denotes or refers to a (R₁-OR₂)ethers, wherein R₁ and R₂ are selected independently of one another from the (C₁-C₁₅)alkyl group.

Preferably, the term (C₁₋₁₅)dialkyl-ethers denotes or refers to a (R₃-O-R₄-OR₅)ethers, wherein R₃, R₄ and R₅ are selected independently of one another from the (C₁-C₁₅)alkyl group.

Preferably, the term (C₁₋₁₅)acetals denotes or refers to a (R₆C(OR₇)₂)acetals, wherein R₆ and R₇ are selected independently of one another from the (C₁-C₁₅)alkyl group.

Preferably, the skilled person will be able to transpose or apply, mutatis mutandis, the description above made for the (C₁-C₁₅)alkyls to the (C₂-C₁₅)alkenes.

The aromatic ring includes the aryl groups, in particular the phenyl, benzyl, naphthyl, biphenyl and tetrahydronaphthyl groups as well as the heterocycles, i.e. rings which, besides the carbon atoms, also comprise heteroatoms such as nitrogen, oxygen and sulphur. Thus, as examples of heterocycles there may be mentioned benzimidazolyls, furyls, imidazolyls, piperazinyls, piperidinyls, pyranyls, pyrazinyls, pyroazolidinyls, pyrazolinyls, pyrazolyls, pyridazinyls, pyridooxazoles, pyridoimidazoles.

Preferably, R is selected from the group comprising (C₁-C₈)alkyls, (C₁₋₈)alkyl-ethers, (C₁₋₈)dialkyl-ethers, (C₁₋₈)acetals, a (C₂-C₉)alkenes.

According to another aspect of the invention, there is also provided the use of the reactive working fluid according to the invention in a cyclic thermodynamic conversion machine.

According to another aspect of the invention, there is also provided the use of the reactive working fluid according to the invention in a heat pump, in a power plant, in a refrigeration machine.

According to the invention, there is also provided a cyclic thermodynamic conversion machine comprising the reactive working fluid according to the invention, means for compressing the reactive working fluid, means arranged to cool down the reactive working fluid, means arranged to expand the reactive working fluid and means arranged to heat up the working fluid.

Preferably, the thermodynamic machine operating in power mode is arranged to:
- dissociate, at least partly, preferably in its entirety, the working fluid into monomers within the means for compressing the working fluid,
- associate, at least partly, preferably partially only, the working fluid into dimers within the means arranged to cool down the working fluid,
- associate, at least partly, preferably in its entirety, the working fluid into dimers within the means arranged to expand the working fluid,
- dissociate, at least partly, preferably partly only, the working fluid into monomers within the means arranged to heat up the working fluid.

Preferably, the thermodynamic machine operating in heat pump mode, is arranged to:
- dissociate, preferably in its entirety, the working fluid into monomers within the means for compressing the working fluid,
- associate, preferably in its entirety, the working fluid into dimers within the means arranged to cool down the working fluid,
- associate, preferably partly only, the working fluid into dimers within the means arranged to expand the working fluid,
- dissociate, preferably partly only, the working fluid into monomers within the means arranged to heat the working fluid.

Preferably, the thermodynamic machine operating in refrigeration mode, is arranged to:
- dissociate, preferably in its entirety, the working fluid into monomers within the means for compressing the working fluid,
- associate, preferably partly only, the working fluid into dimers within the means arranged to cool down the working fluid,
- associate, preferably in its entirety, the working fluid into dimers within the means arranged to expand the working fluid,
- dissociate, preferably in its entirety, the working fluid into monomers within the means arranged to heat the working fluid.

Preferably, a heating machine denotes or refers to a machine providing heating as useful effect and a refrigeration machine denotes or refers to a machine providing cooling as useful effect.

Preferably, the invention also provides a machine that reversibly operates in heating mode and cooling mode, such as a reversible heat pump for example.

According to the present description, cyclic thermodynamic conversion machines may refer to a thermal machine, or heat or thermal engine.

Preferably but not exclusively, according to the present description, the thermodynamic machine is a heat pump, a refrigeration machine, or a power plant. By power plant, it may be understood: the assembly of a power plant dedicated to power generation which is the seat of the thermodynamic cycle.

Preferably, the cyclic thermodynamic conversion machine is a heat pump, a power plant, or a refrigeration machine.

Preferably, the reactive working fluid according to the invention is intended, more preferably arranged, even more preferably specifically arranged, to be used and/or be part of any cyclic thermodynamic conversion machine. Preferably, the reactive working fluid according to the invention is intended, more preferably arranged, even more preferably specifically arranged, to be used and/or be part of any cyclic thermodynamic conversion machine arranged to carry out four, preferably successive, thermodynamic phases comprising, preferably, a compression phase, a cooling phase, an expansion phase and a heating phase.

Preferably, the reactive working fluid according to the invention is intended, more preferably arranged, even more preferably specifically arranged, to be used and/or be part of the cyclic thermodynamic conversion machine according to the invention.

### Brief description of the drawings

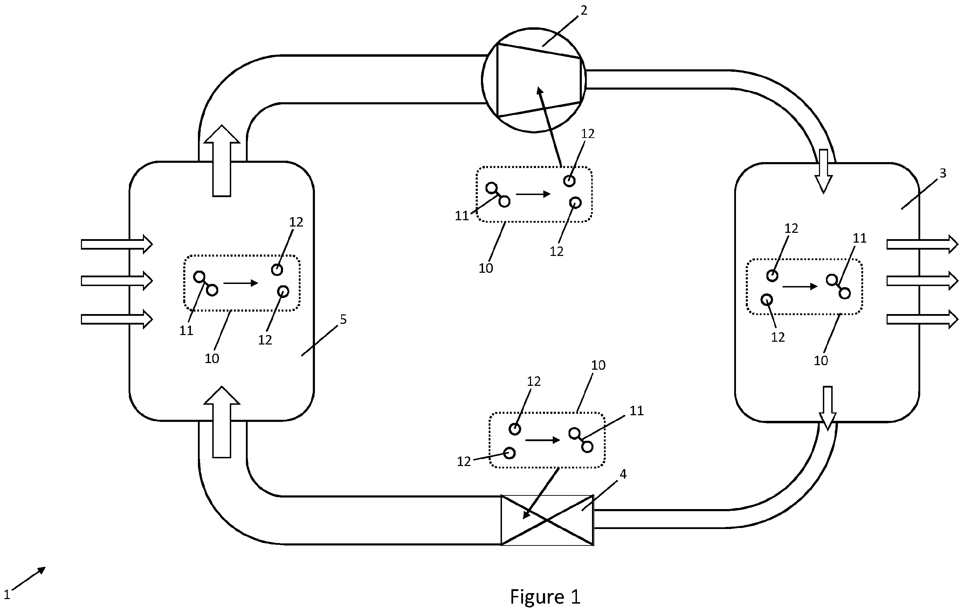

Further inventive objects, features and advantages will become apparent from the following detailed description of several embodiments of the invention with reference to the drawing, in which FIGURE 1 represents the schematic sectional view of a heat pump operating mode, comprising a reactive working fluid according to the invention.

### Detailed description of embodiments of the invention

The embodiments hereinafter described are not restrictive; other embodiments comprising a selection of features described hereinafter may be considered. A selection may comprise features isolated from a set of features (even if this selection is isolated among a sentence comprising other features thereof), if the selection is sufficient to confer a technical advantage or to distinguish the invention from the state of the art. This selection comprises at least a feature, preferably described by its technical function without structural features, or with a part of structural details if this part is sufficient to confer a technical advantage or to distinguish the invention from the state of the art on its own.

In reference to FIGURE 1, it is described a working fluid 10 for cyclic thermodynamic conversion machines 1 according to the invention. The working fluid 10 according to the invention is reactive during each thermodynamic cycle carried out by the thermodynamic machine 1. The working fluid 10 forms a monomer 11/dimer 12 couple. The working fluid 10 comprises a compound 12 capable of reversibly associate/dissociate, during each thermodynamic cycle, by formation/breakage of Van der Waals bonds.

The reactive working fluid 10 or the compound 12 according to the invention does not undergo covalent bonds modification or change. In other words, the atomic and/or molecular orbitals of the working fluid 10 or the compound 12, which is of the monomers 12 and of the dimers 11, are not modified during any phases of the thermodynamic cycle.

According to the invention, the term "reactive" denotes the ability of the compound 12 to reversibly associate/dissociate, during each phase of the thermodynamic cycle, to form a dimer 11/monomer 12 respectively.

The working fluid 10 or the compound 12 undergoes, partly only or at least partly or in its entirety:
- a dissociation into monomers 12 during a compression phase of the thermodynamic cycle,
- an association into dimers 11 during a cooling phase of the thermodynamic cycle,
- an association into dimers 11 during an expansion phase of the thermodynamic cycle,
- a dissociation into monomers 12 during a heating phase of the thermodynamic cycle.

The nonrestrictive embodiment illustrated FIGURE 1 and detailed below pertains to the use of the working fluid 10 according to the invention in a thermodynamic machine 1 operating in heating mode, a heat pump 1 for instance.

The working fluid 10 or the compound 12 after the compression phase of the cycle is completely, or at least mostly, in monomers 12 form.

During the cooling phase of the thermodynamic cycle, the working fluid 10 or the compound 12 or the monomers 12 undergoes a complete association into dimers 11, or at least most of the compound 12 or the monomers 12 undergoes an association into dimers 11. After the cooling phase, the working fluid 10 preferably comprises only dimers 11, or comprises mostly dimers 11 and monomers 12 in a lower extend. During the cooling phase, according to the embodiment, the reactive working fluid 10 according to the invention allows to increase the heat quantity released to the environment, which is the useful effect. Indeed, during the cooling phase (that is the cooling of the working fluid 10 or the heating of the environment), the working fluid 10 undergoes an exothermic reaction due to the association of, most of, preferably the whole of, the monomers 12 into dimers 11. Thus, the efficiency of the energy conversion during the thermodynamic cycle is further increased.

During the expansion phase of the thermodynamic cycle, the working fluid 10 or the compound 12 may undergo a further association of some of the monomers 12 into dimers 11. After the expansion phase, the working fluid 10 comprises monomers 12 and dimers 11. During the heating phase, the working fluid 10 undergoes an endothermic reaction due to the dissociation of, at least a part, the dimers 11 into the monomers 12. After the heating phase of the cycle, the working fluid 10 or the compound 12 is partly dissociated in dimers 11 form.

During the heating phase of the thermodynamic cycle, the working fluid 10 or the compound 12 or the dimers 11 undergoes a dissociation into monomers 12. After the heating phase, the working fluid 10 comprises monomers 12 and dimers 11.

Indeed, during the heating phase (that is the heating of the working fluid 10 or the cooling of the environment), the working fluid 10 undergoes an endothermic reaction due to the dissociation of only a part of the dimers 11 into monomers 12. Thus, the efficiency of the energy conversion during the thermodynamic cycle is further increased.

During the compression phase of the thermodynamic cycle, the working fluid 10 or the compound 12 or the dimers 11 undergoes a complete dissociation into monomers 12, or at least most of the compound 12 or the monomers 12 undergoes a dissociation into dimers 11.

The compression phase is described and applies regardless the operating mode of the cyclic thermodynamic conversion machine in which the working fluid 10 according to the invention is used. In other words, during the compression phase of the working fluid 10 according to the invention used in any cyclic thermodynamic conversion machine operating in heating or in cooling or in power mode, the reactive working fluid 10 according to the invention allows to decrease the quantity of energy required for the compression of the fluid (that is the energy required to carry out the thermodynamic cycle). Indeed, during the compression of a reactive working fluid 10 according to the invention, the working fluid 10 undergoes an endothermic reaction due to the dissociation of, at least a part but preferably the whole of, the dimers 11 into monomers 12. The compression of a fluid increases the temperature of the fluid. Hence, the endothermic reaction that takes place during the compression phase tends to maintain the working fluid 10 cold. Thus, since the compression of a colder fluid requires less energy than a hot fluid, the efficiency of the energy conversion during the thermodynamic cycle is further increased.

According to the present description, the environment or external environment, denotes the fluid, preferably the gas, preferably the surrounding atmosphere, in which the working fluid 10, preferably the component in which the working fluid 10 is circulating during the cooling phase and/or the heating phase. As a non-limiting example, the component in which the working fluid 10 circulates, or is intended to circulate, during the cooling phase and/or the heating phase is a heat exchanger.

Preferably, the compound 12 is an organic molecule.

According to the non-limiting embodiment, the compound 12 is capable of reversibly associate/dissociate, during each thermodynamic cycle, by formation/breakage of hydrogen bonds.

In a preferred embodiment, the working fluid 10 comprises a carboxylic acid (R-COOH) and/or an acid halide (R-COX) and/or an aldehyde (R-COH). R denotes or refers to a substituent or a functional group and X to a halogen. Preferably, X is selected from the group consisting in Fluorine (F), Chlorine (Cl), Bromine (Br) or Iodine (I) atoms.

In that case, the compound 12 consists in a, or consists in a combination of, carboxylic acid (R-COOH) and/or an acid halide (R-COX) and/or aldehyde (R-COH). The working fluid 10 may comprise a mixture of carboxylic acid (R-COOH) and/or an acid halide (R-COX) and/or an aldehyde (R-COH) with one or several fluid(s). The one or several fluid(s) of the mixture may be inert fluid(s).

In a particularly advantageous embodiment, the compound 12 consists in a, or consists in a combination of, carboxylic acid (R-COOH) and/or aldehyde (R-COH). The working fluid 10 may comprise a mixture of carboxylic acid (R-COOH) and/or an aldehyde (R-COH) with one or several fluid(s). The one or several fluid(s) of the mixture may be inert fluid(s).

Preferably, R is selected from the group comprising (C₁-C₁₅)alkyls, (C₁₋₁₅)alkyl-ethers, (C₁₋₁₅)dialkyl-ethers, (C₁₋₁₅)acetals, a (C₂-C₁₅)alkenes, hydrogen or aromatic rings.

Most preferably, R is selected from the group comprising (C₁-C₈)alkyls, (C₁₋₈)alkyl-ethers, (C₁₋₈)dialkyl-ethers, (C₁₋₈)acetals, a (C₂-C₉)alkenes.

Natural working fluids of the state extensively, such as propane, are flammable. Other synthetic working fluids have a significant impact on the environment because of their high global warming potential. Moreover, some of these working fluids of the state of the art further cause atmospheric ozone depletion.

Moreover, the organic working fluids of the state of the art, exhibit a low temperature limit (lower than 350°C) above which they undergo irreversible chemical degradation, in particular through side reactions and/or covalent bonds modification.

As non-limiting examples, the compound 12 may be formic acid, acetic acid, propanoic acid, propanal, butanal. These acids are non-toxic, abundant, thermally stable for the operating temperature range according to the invention, and their fusion point sufficiently low to be used in their liquid or gaseous forms for either refrigeration, or heat pump or power cycle applications.

The reactive working fluid 10 listed above presents the advantage of being safer and/or having no impact on the environment and/or on the atmospheric ozone layer, which is not the case working fluid, in particular refrigerants, of the state of the art.

According to the invention, it is also provided the use of the working fluid 10 according to the invention in a thermodynamic machine 1 operating in cooling mode, a refrigeration machine for instance. The working fluid 10 or the compound 12 after the compression phase of the cycle is completely, or at least mostly, in monomers 12 form.

During the cooling phase of the thermodynamic cycle, the working fluid 10 or the compound 12 or the monomers 12 undergoes a partial association into dimers 11, that is only a part of the compound 12 or the monomers 12 undergoes an association into dimers 11. After the cooling phase, the working fluid 10 preferably comprises dimers 11 and monomers 12. During the cooling phase, (that is the cooling of the working fluid 10 or the heating of the environment), the working fluid 10 undergoes an exothermic reaction due to the association of a part of the monomers 12 into dimers 11. Thus, the efficiency of the energy conversion during the thermodynamic cycle is further increased.

During the expansion phase of the thermodynamic cycle, the working fluid 10 or the compound 12 may undergo a further association of the entire remaining monomers 12 into dimers 11. After the expansion phase, the working fluid 10 comprises only dimers 11. Indeed, it is beneficial to have a complete association of the remaining monomers 12 into dimers 11 during the expansion phase. This allows the working fluid 10 to be only in its dimer form after the expansion phase and thus, to make the most of the endothermic reaction that will happened during the following heating phase (for the description of the heating is set forth in the next paragraph). Thus, the efficiency of the energy conversion during the thermodynamic cycle is further increased.

During the heating phase of the thermodynamic cycle, two alternatives may be beneficial depending on the particular case in point, for instance depending on the place of use (climate, outside temperature...), typology of the thermodynamic machine used, the specific working fluid 10 used...).

In a first alternative, the working fluid 10 or the dimers 11 undergoes a complete dissociation into monomers 12, or at least most of the dimers 11 undergoes a dissociation into monomers 12. After the heating phase, the working fluid 10 comprises only monomers 12, or comprises mostly monomers 12 and some dimers 11 in a lower extend. During the heating phase, the reactive working fluid 10 according to the invention allows to increase the heat quantity absorbed or collected from the environment, which is the useful effect. Indeed, during the heating phase (that is the heating of the working fluid 10 and the cooling of the environment), the working fluid 10 undergoes an endothermic reaction due to the dissociation of, most of, preferably the whole of, the dimers 11 into monomers 12. Thus, the efficiency of the energy conversion during the thermodynamic cycle is further increased. In the first alternative, since the working fluid 10 comprises only dimers 11, or comprises mostly monomers 12 and some dimers 11 in a lower extend, after the heating phase, it is not possible to benefit from the endothermic reaction during the following compression phase anymore.

In a second alternative, the working fluid 10 or the dimers 11 undergoes a partial dissociation into monomers 12, or only some of the dimers 11 undergoes a dissociation into monomers 12. After the heating phase, the working fluid 10 comprises monomers 12 and dimers 11. As for the first alternative, in the second alternative, the reactive working fluid 10 according to the invention still allow to increase the heat quantity absorbed or collected from the environment but in a lower extent compare to the first alternative (due to a lesser amount of dimers 11 dissociated during the heating phase compare to the first alternative). Nevertheless, the efficiency of the energy conversion during the heating phase is still increased compare to the working fluids of the state of the art. In the second alternative, since the working fluid 10 comprises monomers 12 and dimers 11 after the heating phase, the benefit from the endothermic reaction during the following compression phase (due to the presence of a significant amount of dimers 11 in the working fluid 10 during the compression phase) is used.

According to the invention, it is also provided the use of the working fluid 10 according to the invention in a thermodynamic machine 1 operating in power mode, a power plant for instance. The working fluid 10 or the compound 12 after the compression phase of the cycle is completely, or at least mostly, in monomers 12 form.

During the cooling phase of the thermodynamic cycle, the working fluid 10 or the compound 12 or the monomers 12 undergo a partial association into dimers 11, that is only a part of the compound 12 or the monomers 12 undergo an association into dimers 11. After the cooling phase, the working fluid 10 preferably comprises dimers 11 and monomers 12. During the cooling phase, (that is the cooling of the working fluid 10 or the heating of the environment), the working fluid 10 undergoes an exothermic reaction due to the association of a part of monomers 12 into dimers 11. Thus, the efficiency of the energy conversion during the thermodynamic cycle is further increased.

During the expansion phase of the thermodynamic cycle, the working fluid 10 or the compound 12 or the monomers 12 undergoes a complete association into dimers 11, or at least most of the compound 12 or the monomers 12 undergoes an association into dimers 11. After the expansion phase, the working fluid 10 preferably comprises only dimers 11, or comprises mostly dimers 11 and monomers 12 in a lower extend. During the expansion phase, according to the embodiment, the reactive working fluid 10 according to the invention allows to increase the work quantity extracted from the working fluid 10 or released to the environment (the mechanical work extracted by turbines for instance), which is the useful effect. Indeed, during the expansion phase (that is the expansion of the working fluid 10 or the mechanical work transfer to the environment), the working fluid 10 undergoes an exothermic reaction due to the association of, most of, preferably the whole of, the monomers 12 into dimers 11. Thus, the efficiency of the energy conversion during the thermodynamic cycle is further increased.

During the heating phase of the thermodynamic cycle, the working fluid 10 or the compound 12 or dimers 11 undergo a dissociation into monomers 12. After the heating phase, the working fluid 10 comprises monomers 12 and dimers 11. Indeed, during the heating phase (that is the heating of the working fluid 10 or the cooling of the environment), the working fluid 10 undergoes an endothermic reaction due to the dissociation of only a part of the dimers 11 into monomers 12. Thus, the efficiency of the energy conversion during the thermodynamic cycle is further increased.

It is also provided a cyclic thermodynamic conversion machine which comprises the reactive working fluid 10 according to the invention.

The cyclic thermodynamic conversion machine further comprises means for compressing a working fluid 10, means arranged to cool down the working fluid 10, means arranged for working fluid 10 expansion and means arranged to heat up the working fluid. The cyclic thermodynamic conversion machine is arranged to:
- dissociate, partly only or at least partly or in its entirety, the working fluid 10 into monomers 12 within the means for compressing the working fluid 10,
- associate, partly only or at least partly or in its entirety the working fluid 10 into dimers 11 within the means arranged to cool down the working fluid 10,
- associate, partly only or at least partly or in its entirety the working fluid 10 into dimers 11 within the means arranged to expand the working fluid 10,
- dissociate, partly only or at least partly or in its entirety the working fluid 10 into monomers 12 within the means arranged to heat up the working fluid 10.

Preferably, the component of the cooling heat exchanger and/or of the heating heat exchanger, in which the working fluid 10 circulates, or is intended to circulate, is a heat exchanger.

The heating heat exchanger is arranged to carry out the heating phase according to the invention and the cooling heat exchanger is arranged to carry out the cooling phase according to the invention. The above description relating to the heating phase and the cooling phase applies mutatis mutandis for the heating heat exchanger and the cooling heat exchanger.

The heating heat exchanger may be an evaporator and the cooling heat exchanger may be a condenser.

Preferably, the cyclic thermodynamic conversion machine comprises flow means for the working fluid though the components (means for compressing the working fluid, means arranged to cool down the working fluid, means arranged to expand the working fluid and means arranged to heat up the working fluid) of the cyclic thermodynamic conversion machine.

Within the means for cooling the working fluid 10, the reactive working fluid 10 according to the invention will increase the heat quantity released to the environment, which is the useful effect. Indeed, during the cooling phase (that is the cooling of the working fluid 10 or the heating of the environment), the working fluid 10 undergoes an exothermic reaction due to the association of, at least a part or a part only or the entirety of, the monomers 12 into dimers 11. Thus, the efficiency of the energy conversion during the thermodynamic cycle is further increased.

Within the heating heat exchanger, the reactive working fluid 10 according to the invention allows to increase the heat quantity absorbed or collected from the environment, which is the useful effect. Indeed, during the heating phase (that is the heating of the working fluid 10 or the cooling of the environment), the working fluid 10 undergoes an endothermic reaction due to the dissociation of, at least a part or a part only or the entirety of, the dimers 11 into monomers 12. Thus, the efficiency of the energy conversion during the thermodynamic cycle is further increased.

Within the means arranged for working fluid 10 expansion, the reactive working fluid according to the invention allows to increase the work quantity extracted from the working fluid 10 or the mechanical work extracted by turbines, which is the useful effect. Indeed, during the expansion phase (that is the expansion of the working fluid 10 or the mechanical work transfer to the environment), the working fluid 10 undergoes an exothermic reaction due to the association of, at least a part or a part only or the entirety of, the monomers 12 into dimers 11. Thus, the efficiency of the energy conversion during the thermodynamic cycle is further increased.

Within the means for compressing the working fluid 10, the reactive working fluid 10 according to the invention allows to decrease the quantity of energy required for the compression of the fluid (that is the energy required to carry out the thermodynamic cycle). Indeed, during the compression of a reactive working fluid 10 according to the invention, the working fluid 10 undergoes an endothermic reaction due to the dissociation of, at least a part or a part only or the entirety of, the dimers 11 into monomers 12. The compression of a fluid increases the pressure of the fluid, which tends (thermodynamic effect) to increase its temperature. The effect of increasing the temperature, predominant with respect to the opposite effect of increasing pressure, enables the endothermic reaction to take place during the compression phase that tends to maintain the working fluid 10 colder than in case of using inert working fluids. Thus, since the compression of a colder fluid requires less energy than a hot fluid, the efficiency of the energy conversion during the thermodynamic cycle is further increased.

To illustrate the use of the reactive working fluid 10 according to the invention in a cyclic thermodynamic conversion machine, it is also described, as a non-limiting embodiment, a heat pump 1 comprising such reactive working fluid 10.

Regarding the heat pumps, there may exhibit several operating modes. The most common typology, which is the sole used in the domestic domain, is the "vapor compression" heat pump 1 which is illustrated FIGURE 1. In this technology, the working fluid changes according to a thermodynamic cycle comprising four thermodynamic transformations or phases comprising:
- absorbing thermal energy in the heater 5, through vaporization or gaseous heating of the working fluid, which is supplied by the external environment while cooling the external environment,
- compressing the working fluid in the compressor 2, while the working fluid remains in the gas phase, which increases the pressure of the working fluid to its maximum value and, consequently, increases the temperature of the working fluid to its minimum value of the thermodynamic cycle,
- transferring the thermal energy of the working fluid to the external environment while heating the external environment, by cooling down the working fluid in the condenser 3,
- reducing the pressure of the working fluid in the expansion valve 4 which reduces the pressure of the working fluid to its minimum value and, consequently, decreases the temperature of the working fluid to its minimum value of the thermodynamic cycle.

The heat pump 1 according to the embodiment comprises the reactive working fluid 10 according to the invention. The heat pump 1 further comprises means 2 for compressing the reactive working fluid 10. The means for compressing 2 the working fluid may be a compressor 2 or any equivalent means. The heat pump 1 further comprises means 3 arranged to condensate the reactive working fluid 10. The means to condensate 2 the working fluid may be a condenser 2 or any equivalent means. The heat pump 1 further comprises means 4 arranged to expand the reactive working fluid 10. The means to expand 4 the working fluid 10 may be an expansion valve 4 or any equivalent means. The heat pump 1 further comprises means 5 arranged to evaporate the working fluid 10. The means to evaporate 5 the working fluid 10 may be an evaporator 5 or any equivalent means.

Preferably, the heat pump 1 is arranged so that:
- the means 2 for compressing the working fluid 10 dissociate, at least partly but preferably in its entirety, the working fluid 10 or the dimers 11 into monomers 12,
- the means arranged to cool the working fluid 10 associate, at least partly but preferably in its entirety, the working fluid 10 or the monomers 12 into dimers 11,
- the means arranged to expand the working fluid 10 may associate, but not necessarily, only a part of the working fluid 10 or the monomers 12 into dimers 11,
- the means arranged to heat the working fluid 10 dissociate, at least partly, preferably partly only, the working fluid 10 or the dimers 11 into monomers 12.

The skilled person has the general knowledge to transpose the specific description of the heat pump 1 and of the use of the working fluid 10 in a heat pump 1 according to the non-limiting embodiments to any cyclic thermodynamic conversion machine. The technical effects provided by the reactive working fluid 10 according to the invention, in particular those resulting from reversibly association/dissociation of the reactive working fluid 10 to form dimer/monomer respectively, will benefit and apply to any cyclic thermodynamic conversion machine.

Thus, any feature of the working fluid 10 made in the present document can be directly transposed or included in the cyclic thermodynamic conversion machine(s) according to the invention and conversely.

Hence, it is also provided a cyclic thermodynamic conversion machine operating in refrigeration mode, said refrigeration machine, comprising the reactive working fluid 10 according to the invention.

In particular, it is provided a refrigeration machine comprising the reactive working fluid 10 according to the invention.

Preferably, the refrigeration machine is arranged so that:
- the means 2 for compressing the working fluid 10 dissociate, at least partly but preferably in its entirety, the working fluid 10 or the dimers 11 into monomers 12,
- the means arranged to cool the working fluid 10 associate, at least partly and preferably partly only, the working fluid 10 or the monomers 12 into dimers 11,
- the means arranged to expand the working fluid 10 associate, at least partly but preferably in its entirety of the working fluid 10 or the monomers 12 into dimers 11,
- the means arranged to heat the working fluid 10 dissociate, at least partly, partly only or in its entirety, the working fluid 10 or the dimers 11 into monomers 12.

Hence, it is also provided a cyclic thermodynamic conversion machine operating in power mode, said power machine, comprising the reactive working fluid 10 according to the invention.

In particular, it is provided a power plant comprising the reactive working fluid 10 according to the invention.

Preferably, the power machine or the power plant is arranged so that:
- the means 2 for compressing the working fluid 10 dissociate, at least partly but preferably in its entirety, the working fluid 10 or the dimers 11 into monomers 12,
- the means arranged to cool the working fluid 10 associate, at least partly and preferably partly only, the working fluid 10 or the monomers 12 into dimers 11,
- the means arranged to expand the working fluid 10 associate, at least partly but preferably in its entirety, the working fluid 10 or the monomers 12 into dimers 11,
- the means arranged to heat the working fluid 10 dissociate, at least partly and preferably partly only, the working fluid 10 or the dimers 11 into monomers 12.

The use of the reactive working fluid 10 in a heat pump 1, or a heat pump 1 comprising the reactive working fluid 10, will provide an increase by 100% of the coefficient of performance (COP) defined as the ratio between the quantity of heat supplied externally (to the environment, through the heat exchanger cooling down the working fluid), which is the useful effect, and the electrical/mechanical energy required to fluid compression (the price to pay). COP thus results to be doubled with respect to the heat pump of the state of the art. COP currently achieved by heat pumps of the state of the art reaches a maximum of 4.5 while the COP of the heat pump 1 according to the state of the art reaches 9.

In another example, the use of the reactive working fluid 10 in a power plant, or a power plant comprising the reactive working fluid 10, will allow an increase by 200% of the specific electrical power, specific to the mass flow rate of the working fluid, produced by such power plant, with respect to comparable inert fluids. The specific net power thus results to be tripled with respect to power plants of the state of the art.

The use of the reactive working fluid 10 in a power plant, or a power plant comprising the reactive working fluid 10, will provide an improvement of 30% efficiency (increase by +30% compared to the current efficiency achieved by power plants according to the state of the art).

The invention is not restricted to embodiments described above and numerous adjustments may be made within the scope of the invention.

In addition, the different features, forms, variants and embodiments of the invention can be associated with each other in various combinations as long as they are not incompatible or exclusive of each other.

## Claims

1. Reactive working fluid for cyclic thermodynamic conversion machines, said working fluid, forming a monomer/dimer couple, said working fluid comprising a compound capable of reversibly associating/dissociating, during each thermodynamic cycle, by formation/breakage of Van der Waals bonds.

2. Working fluid according to claim 1, being unable to form a new covalent bond or to incur breakage of its covalent bonds during the thermodynamic cycle.

3. Working fluid according to claim 1 or 2, wherein the compound is an organic molecule.

4. Working fluid according to any of the preceding claims, the working fluid comprises a carboxylic acid (R-COOH) and/or an acid halide (R-COX) and/or an aldehyde (R-COH), wherein R is a substituent or a functional group and X is a halogen.

5. Working fluid according to the preceding claim, wherein R is selected from the group comprising (C₁-C₁₅)alkyls, (C₁₋₁₅)alkyl-ethers, (C₁₋₁₅)dialkyl-ethers, (C₁₋₁₅)acetals, (C₂-C₁₅)alkenes, hydrogen or aromatic rings.

6. Working fluid according to the preceding claim, wherein R is selected from the group comprising (C₁-C₈)alkyls, (C₁₋₈)alkyl-ethers, (C₁₋₈)dialkyl-ethers, (C₁₋₈)acetals, (C₂-C₉)alkenes.

7. Use of the reactive working fluid according to claims 1 to 6 in a cyclic thermodynamic conversion machine.

8. Use of the reactive working fluid according to claims 1 to 6 in a heat pump.

9. Use of the reactive working fluid according to claims 1 to 6 in a power plant.

10. Use of the reactive working fluid according to claims 1 to 6 in a refrigeration machine.

11. Cyclic thermodynamic conversion machine comprising means for compressing a working fluid, means arranged to cool down the working fluid, means arranged to expand the working fluid and means arranged to heat up the working fluid; the working fluid forming a monomer/dimer couple and comprises a compound capable of reversibly associating/dissociating, during each thermodynamic cycle, by formation/breakage of Van der Waals bonds; said cyclic thermodynamic conversion machine is arranged to:
- dissociate, at least partly, the working fluid into monomers within the means for compressing the working fluid,
- associate, at least partly, the working fluid into dimers within the means arranged to cool down the working fluid,
- associate, at least partly, the working fluid into dimers within the means arranged to expand the working fluid,
- dissociate, at least partly, the working fluid into monomers within the means arranged to heat up the working fluid.

12. Cyclic thermodynamic conversion machine according to claim 11, wherein said cyclic thermodynamic conversion machine is a heat pump.

13. Cyclic thermodynamic conversion machine according to claim 11, wherein said cyclic thermodynamic conversion machine is a power plant.

14. Cyclic thermodynamic conversion machine according to claim 11, wherein said cyclic thermodynamic conversion machine is a refrigeration machine.
